# EUROPEAN PATENT SPECIFICATION

(11) **EP 0 509 830 B1**
(45) Date of publication and mention of the grant of the patent: **18.09.1996**
(21) Application number: 92303462.3
(22) Date of filing: 16.04.1992
(51) Int. Cl.: G01F 1/58, G01F 1/60

(54) **Electromagnetic flowmeter**
Elektromagnetischer Durchflussmesser
Débimètre électromagnétique

(30) Priority: 18.04.1991 JP 86536/91
(43) Date of publication of application: 21.10.1992
(73) Proprietor: KABUSHIKI KAISHA TOSHIBA, Kawasaki-shi, Kanagawa-ken 210 (JP)
(72) Inventor: Tomita, Toyofumi, c/o Intellectual Property Div., Minato-ku, Tokyo 105 (JP)
(74) Representative: BATCHELLOR, KIRK & CO.

(56) References cited:
- DE-A- 2 856 240
- PATENT ABSTRACTS OF JAPAN vol. 5, no. 48 (P-055) 7 April 1981 & JP-A-56 002 508 (TOSHIBA CORP.)

## Description

This invention relates to an electromagnetic flowmeter, and more particularly to an electromagnetic flowmeter using a magnetic sensor for measuring magnetic flux density.

A known electromagnetic flowmeter has a detector constructed such that the conductive fluid flows through a measuring pipeline having electrodes attached to an internal wall thereof. A magnetic flux is generated in the measuring pipeline by means of exciting coils of an exciting circuit in which an alternating exciting current flows. A detector signal, which is a voltage signal in proportion to the density of the magnetic flux and the average flow speed of the fluid flowing through the measuring pipeline, is output from the electrodes. This signal is amplified and then processed by a transducer. After an amplifier has amplified the detector signal, a flow rate signal indicating the flow rate of the fluid flowing in the measuring pipeline is generated by way of signal processing by a computing element.

In this case, since a value of the exciting current supplied to the exciting coil and the density of the magnetic flux generated within the measuring pipeline are in proportion, when the exciting current is fixed so that a value of the detector signal output from the electrode corresponds only with the average flow speed of the fluid, the computing element may be simplified to calculate the flow rate from the value of the detector signal.

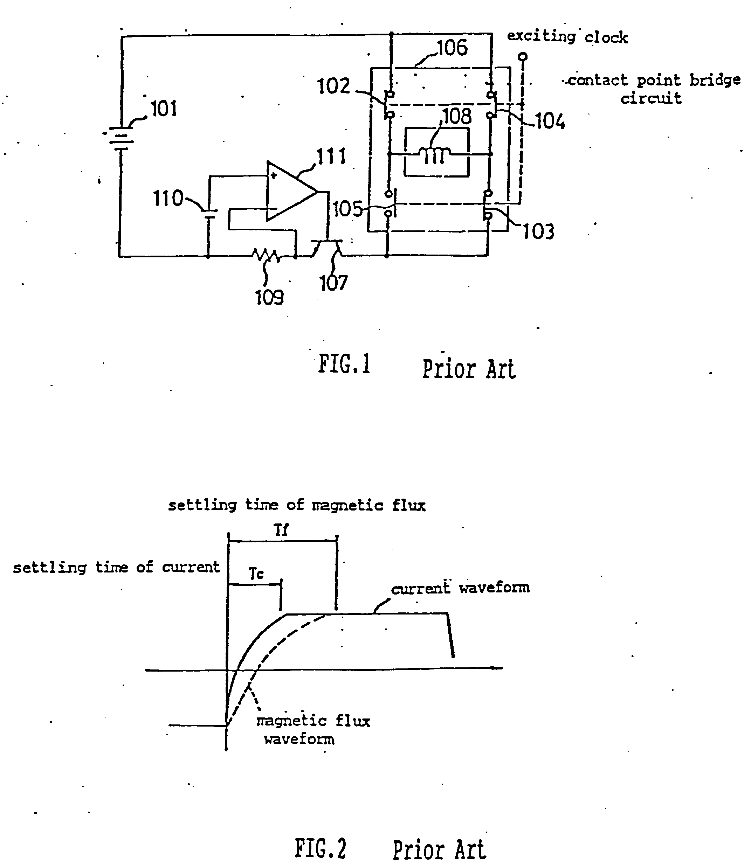

Figure 1 shows a circuit diagram of an exciting circuit used in a conventional electromagnetic flowmeter.

In the exciting circuit, an exciting current is generated from direct current power source 101. Contact point bridge circuit 106 is constructed such that two usually open contact points 102 and 103 are closed when an exciting clock is supplied to those points and two usually closed contact points 104 and 105 are open when the exciting clock is supplied to those points. The value of the exciting current flowing in contact point bridge circuit 106 is regulated by transistor 107 and current detection resistor 109 is used to detect the value of the exciting current flowing in exciting coil 108. Reference voltage source 110 generates a reference voltage and the reference voltage is compared with a measured voltage obtained from resistor 109 in a computing amplifier 111. Based on the results of this comparison, the value of the exciting current detected by resistor 109 is fixed to a value corresponding to the reference voltage by the computing amplifier 111 controlling the conductivity of transistor 107. The contact point bridge 106, driven by the exciting clock, thus generates an alternating current from a direct current obtained from direct current power source 101.

However, when such electromagnetic flowmeters determine flow rates of liquid pulp and other slurry fluids, these liquid pulps and other slurry fluids contain solid matters which often cause problems, such as the presence of low frequency noise, which affects the detector signal output from the electrodes making measurement impossible.

Consequently, a method solving such problems has been suggested which utilises the characteristic 1/F possessed by matters generating a noise that, as a frequency of the exciting current is raised, a noise level is lowered accordingly, raising the frequency of the exciting circuit improves a S/N ratio of the detection signal.

However, in such an exciting circuit as that shown in Figure 1, when the value of the exciting current having a square wave form is fixed, the effect of eddy currents flowing in the casing of the detectors is that the value of the magnetic flux within the detector does not follow the exciting current immediately, as shown in Figure 2, so that, when the frequency of the exciting current is raised, the build up and decay of the magnetic flux is delayed causing error in the measurement.

Subsequently, it is considered that a means to solve such problems in the method for raising the frequency of the exciting current would be the installation of a magnetic sensor within the detector so that the magnetic flux within the detector is detected immediately by the magnetic sensor, thus the exciting current is controlled at a fixed value.

It is an object of the invention to improve the precision of measuring the flow rate by an electromagnetic flowmeter.

The foregoing object is achieved according to a first aspect of the present invention by providing an electromagnetic flowmeter for measuring the flow rate of a fluid through a measuring pipeline comprising electromagnetic means arranged to be excited by an exciting current alternating in polarity at a frequency, to generate the magnetic flux in a magnetic field in which the pipeline is located; and signal generating means for generating an electric signal according to the density of the magnetic flux generated in the magnetic field and the flow rate of the fluid in the pipeline; characterised in the provision of magnetic sensor means for measuring the density of the magnetic flux generated in the magnetic field; adjusting means, coupled to the magnetic sensor means, for adjusting the density of the magnetic flux to a predetermined value by controlling the exciting current; measuring means for measuring the electric signal at a predetermined time cycle which is determined by the frequency of alternation of the exciting current, such that the electric signal is measured every time the density of the magnetic flux is at the predetermined value; and computing means for computing the flow rate of the fluid based on the measured electric signal and the exciting current at a time when the measured electric signal is detected.

According to another aspect of the present invention, the above objects are achieved by providing a method of measuring the flow rate of a fluid flowing through a measuring pipeline arranged in a magnetic field, comprising the steps of supplying an exciting current alternating in polarity at a frequency, to generate the magnetic flux in the magnetic field; measuring the density of the magnetic flux in the magnetic field; and generating an electric signal according to the density of the magnetic flux generated in the magnetic field and the flow rate of the fluid, characterised by:
adjusting the magnetic flux density to a predetermined value by controlling the exciting current; measuring the electric signal at a predetermined time cycle which is determined by the frequency of the exciting current, such that the electric signal is measured every time the magnetic flux density is at the predetermined value; and computing the flow rate of the fluid based on the measured electric signal and the exciting current at the time when the measured electric signal is detected.

In order that the invention may be more readily understood, it will now be described, by way of example only, with reference to the accompanying drawings, in which:-
Figure 1 is a circuit diagram showing an exciting circuit of a conventional electromagnetic flowmeter;
Figure 2 is a waveform diagram showing the relationship between an exciting current and a magnetic flux of a conventional electromagnetic flowmeter;
Figure 3 is a block diagram showing an embodiment of an electromagnetic flowmeter according to the invention;
Figure 4 is a circuit diagram showing the magnetic flux control circuit shown in Figure 3;
Figure 5 is a circuit diagram showing the exciting power source circuit shown in Figure 3; and
Figures 6a to 6e are waveform diagrams showing the operations of the electromagnetic flowmeter shown in Figure 3.

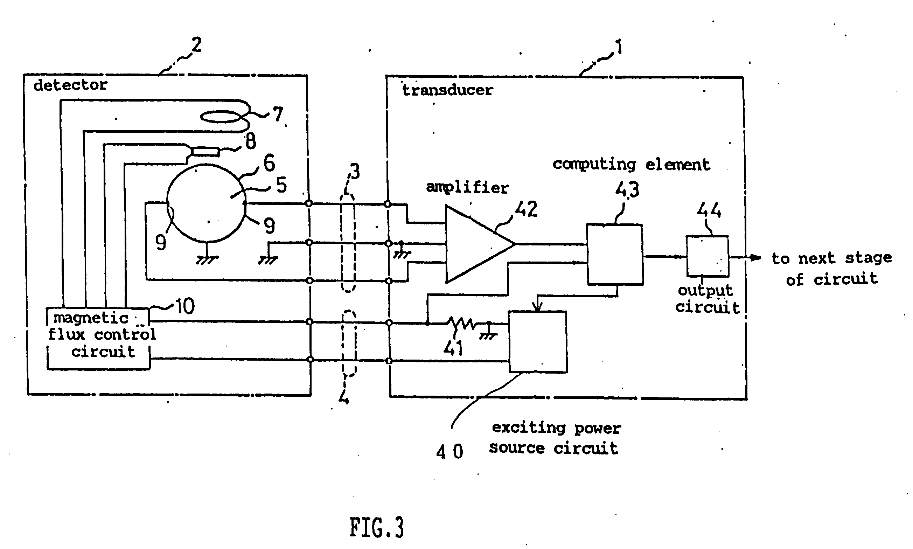

Figure 3 shows an electromagnetic flowmeter which has transducer 1, detector 2, signal cable 3 and exciting cable 4. An exciting current is output from transducer 1 and supplied to detector 2 along exciting cable 4 to operate detector 2. A detector signal obtained by a detection operation of detector 2 is supplied to transducer 1 along signal cable 3.

In detector 2, the object under measurement is fluid 5 flowing in measuring pipeline 6. Exciting coil 7 is installed outside this measuring pipeline 6 and magnetic sensor 8, which detects the density of magnetic flux generated by exciting coil 7, is installed in practically the same section as exciting coil 7. A pair of electrodes 9 are installed inside measuring pipeline 6 facing each other. The exciting current output from transducer 1 is input along exciting cable 4 to drive exciting coil 7 and generate a magnetic flux within measuring pipeline 6. The density of the magnetic flux is detected by magnetic sensor 8 and controlled by magnetic flux control circuit 10. The detector signal is generated between each of the electrodes in proportion to the flow rate of fluid 5 flowing in measuring pipeline 6. This detector signal is supplied to transducer 1 along signal cable signal 3.

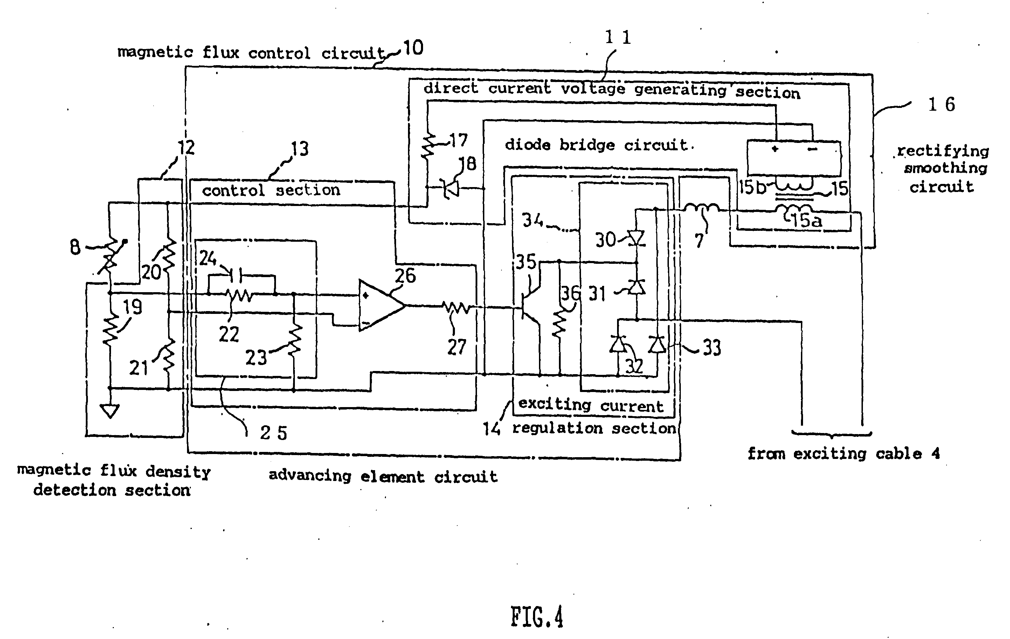

As is shown in Figure 4, magnetic flux control circuit 10 has a D.C. voltage generation section 11, control section 13 and exciting current regulation section 14. A D.C. voltage is produced from the exciting current supplied along exciting cable 4 by D.C. voltage generating section 11 which supplies power to all parts of the circuit. The resistance of magnetic sensor 8 is detected by magnetic flux density detection section 12. Control section 13 generates a control signal according to the results of the detection which operates exciting current regulation section 14. The exciting current is regulated so that the density of the magnetic flux generated by exciting coil 7 is at a preset value.

In D.C. voltage generation section 11, primary coil 15a of transformer 15 is connected in series with exciting coil 7. Rectifying smoothing circuit 16 rectifies A.C. voltage obtained in secondary coil 15b of transformer 15 to generate a D.C. voltage which is conducted through resistor 17 to magnetic flux density detection section 12. The value of the D.C. voltage supplied to magnetic flux density detection section 12 through resistor 17 is set to a preset value by Zener diode 18. As described above, D.C. voltage generating section 11 converts the exciting current voltage at the preset value supplied to magnetic flux detection section 12.

Magnetic flux density detection section 12 comprises magnetic sensor 8 together with a resistance bridge circuit of three resistors 19 - 21. The D.C. voltage output from D.C. voltage generating section 11 operates magnetic flux density detection section 12 to generate a magnetic flux density signal according to the value of a resistance of magnetic sensor 8, which is supplied to control section 13.

Control section 13 is so constructed that two resistors 22 and 23 are connected in series and advancing element circuit 25 consists of capacitor 24 connected in parallel to resistor 22. The delay generated by exciting coil 7 and the casing of detector 2, etc., is compensated by advancing element circuit 25. A voltage obtained at contact points of resistors 20 and 21 as a reference voltage, a voltage obtained at contact points of magnetic sensor 8 and resistor 19 as a magnetic flux density signal are input into differential amplifier 26 to generate a current regulation signal according to a difference voltage between the reference voltage and magnetic flux density signal. The current regulating signal is conducted into exciting current regulating section 14 through current limiting resistor 27.

In exciting current regulation section 14, diode bridge circuit 14 is formed with four diodes 30 - 33. Transistor 35 is conducted to diode bridge circuit 34 according to the value of the current regulation signal supplied from control section 13 and controls the exciting current. Even when transistor 35 is off, in diode bridge circuit 34 the exciting current may flow through resistor 36 to some extent. Transistor 35 is conducted according to the current regulation signal supplied from control section 13. Consequently, the value of the current flowing in exciting coil 7 is regulated by transistor 35.

Then, magnetic flux density detection section 12 detects the resistance of magnetic sensor 8 and the density of the magnetic flux within measuring pipeline 6 is detected from the detected resistance of magnetic sensor 8. Based upon the results of this detection, control section 13 generates the current regulation signal controlling exciting current regulation section 14. With that, the value of the exciting current supplied to exciting coil 7 is regulated and the density of the magnetic flux is set at a value. Therefore, during the period of exciting current build up and decay, the density of the magnetic flux is lowered, the value of the exciting current conducted is increased by transistor 35 and the density of the magnetic flux quickly returns to the preset value. Consequently, when the frequency of the exciting current is raised, the density of the magnetic flux generated in measuring pipeline 6 can be fixed.

In addition, in transducer 1, shown in Figure 3, exciting power source circuit 40 generates a presetting frequency of the clock signal and the exciting current. Resistor 41 generates the exciting current value detector signal according to the value of the exciting current output from exciting power source circuit 40. Amplifier 42 amplifies the detector signal output from detector 2 along signal cable 3. Based upon the exciting current value detector signal obtained from resistor 41, computing element 43 compensates the detector signal supplied from amplifier 42 and removes the exciting current value fluctuations which cause error. Output circuit 44 converts the detector signal output from computing element 43 to a 4 - 20 mA unified signal. With the construction described above, the alternating exciting current is generated and delivered into exciting cable 4 to drive detector 2. The detector signal output from detector 2 along signal cable 3 through computing processing is generated as a unified signal.

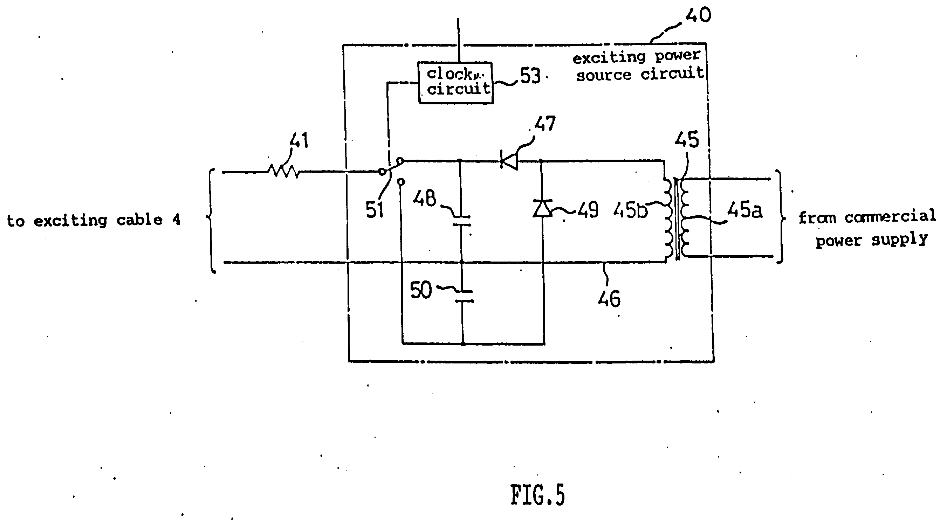

In exciting power source circuit 40, shown in Figure 5, transformer 45 transforms A.C. voltage supplied from a suitable power source. Diode 47 rectifies the alternating voltage obtained from secondary coil 45b of transformer 45 and generates a positive polarity voltage against common line 46. The positive voltage is maintained by condenser 48. The diode 49 rectifies the alternating voltage obtained from secondary coil 45b and generates a negative polarity voltage against common line 46. The negative polarity voltage is maintained by condenser 50. Clock circuit 53 generates a clock signal having a preset frequency supplied to computing element 43 and every part of the circuit. In response to the clock signal output from clock circuit 53, switch 51 alternately selects the positive voltage and negative voltage maintained by condensers 48 and 50 and generates the alternating exciting current. The alternating exciting current generated is delivered to resistor 41 along exciting cable 4.

In addition, since the alternating voltage obtained from secondary coil 45b of transformer 45 is full wave rectified, the effect of a load can be easily obtained. Therefore, when a consuming power of detector 2 becomes increased, that is, when the value of the exciting current reaches a prescribed value, with a fall of a voltage of the exciting current, the consuming power of transistor 35 installed in magnetic flux control circuit 10 falls and a total consuming power of the electromagnetic flowmeter also falls.

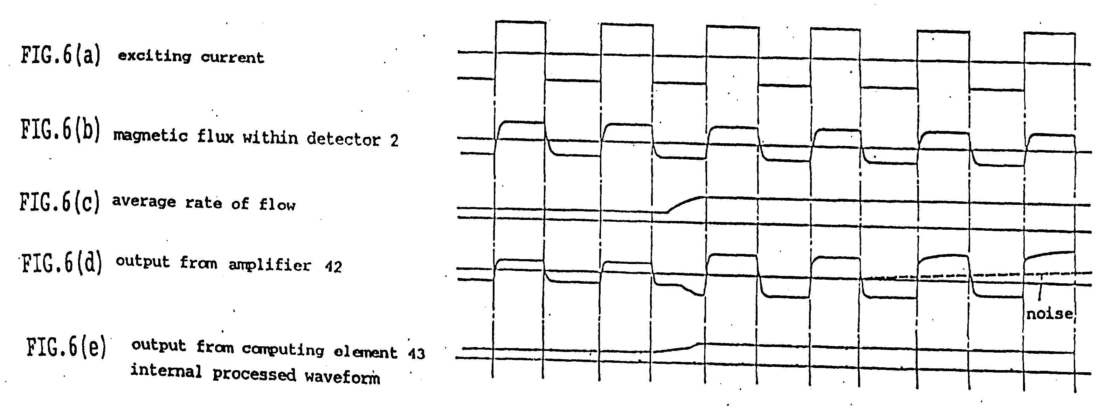

Figures 6a to 6e are illustrations of operations of the embodiment.

Firstly, Figure 6a shows an exciting current which should be output from exciting power source circuit 40. Exciting coil 7 excited by the exciting current produces a magnetic flux, as shown by Figure 6b, within measuring pipeline 6. Figure 6c shows the detector signal output by each electrode 9 according to the average flow rate of fluid 5 flowing in measuring pipeline 6 and the density of the magnetic flux. Figure 6d shows the detector signal amplified by amplifier 42 of transducer 1.

Then, magnetic flux control circuit 10 installed in detector 2 ensures the density of the magnetic flux generated by exciting coil 7 is normal. The value of the exciting current flowing in exciting coil 7 is controlled to the fixed value (absolute value). When the frequency of the exciting current is raised, the magnetic flux can be built up or decay precisely.

An output from amplifier 42 is input into computing element 43 at a predetermined time cycle, which is determined by the frequency of the exiting current, when the exciting current is stabilised, for example, just before the exciting current, is changed from a preset value signal to the other preset value signal, so that the electric signal is measured every time the density of the magnetic flux is at the predetermined value. As shown in Figure 6e, an output signal indicating the flow rate of fluid 5 flowing within measuring pipeline 6 is output from computing element 43. A unified signal is generated according to the output signal by output circuit 44.

In this embodiment, the value of the exciting current flowing in exciting coil 7 is controlled so that the magnetic flux generated within measuring pipeline 6 is at the preset value. The detector signal output from detector 2 is input into transducer 1 when the exciting current is stabilised. Since the value of the exciting current is compensated and the value of this detector signal is generated as a unified signal when the exciting frequency is raised, the number of cables between detector 2 and transducer 1 are not increased, the magnetic flux within detector 2 is fixed and the flow rate of slurry fluids can be measured precisely.

In addition, in the above-mentioned embodiment, D.C. voltage generating section 11, to which the exciting current is supplied, installed in magnetic flux control circuit 10, generates the D.C. voltage used in magnetic flux control circuit 10. The D.C. voltage used in magnetic flux control circuit 10 may be generated in similar ways, and the D.C. voltage generated from other suitable sources of power may be used in all parts of magnetic flux control circuit 10.

When this invention is used as described above, when the exciting frequency is raised without increasing the number of cables between the detector and the transducer, the magnetic flux within the detector is fixed and the flow rate of slurry fluids can be measured precisely.

## Claims

1. An electromagnetic flowmeter for measuring the flow rate of a fluid (5) through a measuring pipeline (6) comprising electromagnetic means (7) arranged to be excited by an exciting current alternating in polarity at a frequency, to generate the magnetic flux in a magnetic field in which the pipeline is located; and signal generating means (9) for generating an electric signal according to the density of the magnetic flux generated in the magnetic field and the flow rate of the fluid in the pipeline;
characterised in the provision of magnetic sensor means (8, 12) for measuring the density of the magnetic flux generated in the magnetic field; adjusting means (10), coupled to the magnetic sensor means, for adjusting the density of the magnetic flux to a predetermined value by controlling the exciting current; measuring means (42) for measuring the electric signal at a predetermined time cycle which is determined by the frequency of alternation of the exciting current, such that the electric signal is measured every time the density of the magnetic flux is at the predetermined value; and computing means (43) for computing the flow rate of the fluid based on the measured electric signal and the exciting current at a time when the measured electric signal is detected.

2. The electromagnetic flowmeter of claim 1,
characterised in that adjusting means includes D.C. voltage generating means (11) for generating D.C. power by converting the exciting current to supply the magnetic sensor means and controlling means (13, 14) for controlling the exciting current.

3. The electromagnetic flowmeter of claim 1 or 2,
characterised in that the computing means includes means for measuring the exciting current and computing means for computing the flow rate of the fluid.

4. A method of measuring the flow rate of a fluid flowing through a measuring pipeline arranged in a magnetic field, comprising the steps of supplying an exciting current alternating in polarity at a frequency, to generate the magnetic flux in the magnetic field; measuring the density of the magnetic flux in the magnetic field; and generating an electric signal according to the density of the magnetic flux generated in the magnetic field and the flow rate of the fluid, characterised by:
adjusting the magnetic flux density to a predetermined value by controlling the exciting current; measuring the electric signal at a predetermined time cycle which is determined by the frequency of the exciting current, such that the electric signal is measured every time the magnetic flux density is at the predetermined value; and computing the flow rate of the fluid based on the measured electric signal and the exciting current at the time when the measured electric signal is detected.

5. The method of claim 4, wherein the step of adjusting includes the step of generating D.C. power by converting the exciting current and the step of controlling the exciting current.

6. The method of claim 4, wherein the step of computing includes the step of measuring the exciting current and the step of computing the flow rate of the fluid.

## Patentansprüche

1. Elektromagnetischer Durchflußmesser zum Messen der Durchflußrate einer Flüssigkeit (5) durch ein Meßrohr (6) mit einer elektromagnetischen Einrichtung (7), die so aufgebaut ist, daß sie von einem in der Polarität bei einer Frequenz wechselnden Anregungsstrom angeregt ist, um einen magnetischen Fluß in einem Magnetfeld zu erzeugen, in dem sich das Rohr befindet; und einer Signalerzeugungseinrichtung (9) zum Erzeugen eines elektrischen Signals gemäß der Dichte des im Magnetfeld erzeugten magnetischen Flusses und der Durchflußrate der Flüssigkeit im Rohr;
gekennzeichnet durch die Bereitstellung einer Magnetsensoreinrichtung (8, 12) zum Messen der Dichte des im Magnetfeld erzeugten magnetischen Flusses; einer Einstelleinrichtung (10), die an die Magnetsensoreinrichtung gekoppelt ist, zum Einstellen der Dichte des magnetischen Flusses auf einen vorbestimmten Wert durch Regeln des Anregungsstroms; einer Meßeinrichtung (42) zum Messen des elektrischen Signals in einem vorbestimmten Zeitzyklus, der durch die Frequenz des Anregungswechselstroms bestimmt ist, so daß das elektrische Signal jedesmal gemessen wird, wenn sich die Dichte des magnetischen Flusses auf einem vorbestimmten Wert befindet; und einer Recheneinheit (43) zum Berechnen der Durchflußrate der Flüssigkeit auf der Grundlage des gemessenen elektrischen Signals und des Anregungsstroms zu einem Zeitpunkt, wenn das gemessene elektrische Signal detektiert ist.

2. Elektromagnetischer Durchflußmesser nach Anspruch 1, dadurch gekennzeichnet, daß die Einstelleinrichtung eine Gleichspannungserzeugungseinrichtung (11) zum Erzeugen einer Gleichstromleistung durch Wandeln des Anregungsstroms zur Versorgung der magnetischen Sensoreinrichtung und eine Regeleinrichtung (13, 14) zum Regeln des Anregungsstroms umfaßt.

3. Elektromagnetischer Durchflußmesser nach Anspruch 1 oder 2, dadurch gekennzeichnet, daß die Recheneinrichtung eine Einrichtung zum Messen des Anregungsstroms und eine Recheneinrichtung zum Berechnen der Durchflußrate der Flüssigkeit umfaßt.

4. Verfahren zum Messen der Durchflußrate einer durch ein Meßrohr, das in einem Magnetfeld angeordnet ist, fließenden Flüssigkeit mit den Schritten des Einspeisens eines bei einer Frequenz die Polarität ändernden Anregungsstroms zur Erzeugung des magnetischen Flusses im Magnetfeld; eines Messens der Dichte des magnetischen Flusses im Magnetfeld; und eines Erzeugens eines elektrischen Signals gemäß der Dichte des im Magnetfeld erzeugten magnetischen Flusses und der Durchflußrate der Flüssigkeit, gekennzeichnet durch:
Einstellen der magnetischen Flußdichte durch Regeln des Anregungsstroms auf einen vorbestimmten Wert; Messen des elektrischen Signals in einem vorbestimmten Zeitzyklus, der durch die Frequenz des Anregungsstroms bestimmt ist, so daß das elektrische Signal jedesmal gemessen wird, wenn sich die magnetische Flußdichte auf einem vorbestimmten Wert befindet; und Berechnen der Durchflußrate der Flüssigkeit auf der Grundlage des gemessenen elektrischen Signals und des Anregungsstroms zum Zeitpunkt, wenn das gemessene elektrische Signal detektiert wird.

5. Verfahren nach Anspruch 4, wobei der Schritt des Einstellens den Schritt eines Erzeugens einer Gleichstromleistung durch Wandeln des Anregungsstroms und den Schritt des Regelns des Anregungsstroms umfaßt.

6. Verfahren nach Anspruch 4, wobei der Schritt des Berechnens den Schritt des Messens des Anregungsstroms und den Schritt des Berechnens der Durchflußrate der Flüssigkeit umfaßt.

## Revendications

1. Débitmètre électromagnétique pour la mesure du débit d'un fluide (5) dans une conduite de mesure (6) comprenant un moyen électromagnétique (7) prévu pour être excité par un courant d'excitation de polarité A.C. à une certaine fréquence, pour générer le flux magnétique dans un champ magnétique dans lequel est située la conduite; et un moyen de génération de signal (9) pour générer un signal électrique selon la densité du flux magnétique généré dans le champ magnétique et selon le débit du fluide dans la conduite;
débitmètre caractérisé par la prévision d'un moyen de capteur magnétique (8, 12) pour mesurer la densité du flux magnétique généré dans le champ magnétique; un moyen de réglage (10) couplé au moyen de capteur magnétique pour régler la densité du flux magnétique à une valeur prédéterminée par commande du courant d'excitation; un moyen de mesure (42) pour mesurer le signal électrique selon un cycle de temps prédéterminé qui est déterminé par la fréquence de variation du courant d'excitation de telle façon que le signal électrique soit mesuré chaque fois que la densité du flux magnétique se trouve à la valeur prédéterminée; et un moyen de calcul (43) pour calculer le débit du fluide sur la base du signal électrique mesuré et du courant d'excitation à un instant où le signal électrique mesuré est détecté.

2. Débitmètre électromagnétique selon la revendication 1, caractérisé en ce que le moyen de réglage comprend un moyen de génération de tension D.C. (11) pour générer une puissance D.C. par conversion du courant d'excitation afin d'alimenter le moyen de capteur magnétique et un moyen de commande (13, 14) pour commander le courant d'excitation.

3. Débitmètre électromagnétique selon la revendication 1 ou 2, caractérisé en ce que le moyen de calcul comprend un moyen pour la mesure du courant d'excitation et un moyen de calcul pour le calcul du débit de fluide.

4. Procédé de mesure du débit d'un fluide traversant une conduite de mesure placée dans un champ magnétique, comprenant une étape de fourniture d'un courant d'excitation de polarité A.C. à une certaine fréquence, pour générer le flux magnétique dans le champ magnétique; une étape de mesure de la densité du flux magnétique dans le champ magnétique; et une étape de génération d'un signal électrique selon la densité du flux magnétique généré dans le champ magnétique et selon le débit du fluide;
procédé caractérisé par le réglage de la densité de flux magnétique à une valeur prédéterminée par commande du courant d'excitation; la mesure du signal électrique selon un cycle de temps prédéterminé qui est déterminé par la fréquence du courant d'excitation de telle façon que le signal électrique soit mesuré chaque fois que la densité du flux magnétique se trouve à la valeur prédéterminée; et le calcul du débit de fluide sur la base du signal électrique mesuré et du courant d'excitation à l'instant où le signal électrique mesuré est détecté.

5. Procédé selon la revendication 4, selon lequel l'étape de réglage comprend une étape de génération d'une puissance D.C. par conversion du courant d'excitation et une étape de commande du courant d'excitation.

6. Procédé selon la revendication 4, selon lequel l'étape de calcul comprend une étape de mesure du courant d'excitation et une étape de calcul du débit du fluide.
